# EUROPÄISCHE PATENTSCHRIFT

(11) **EP 3 025 125 B1**
(45) Veröffentlichungstag und Bekanntmachung des Hinweises auf die Patenterteilung: **21.03.2018**
(21) Anmeldenummer: 13756296.3
(22) Anmeldetag: 23.07.2013
(51) Int. Cl.: G01D 5/244

(54) **VERFAHREN ZUR DYNAMISCHEN LINEARISIERUNG VON SENSORSIGNALEN EINES MAGNETBAND-LÄNGENMESSSYSTEMS**
METHOD FOR DYNAMIC LINEARISATION OF SENSOR SIGNALS FROM A MAGNETIC STRIP LENGTH MEASURING SYSTEM
PROCÉDÉ DE LINÉARISATION DYNAMIQUE DE SIGNAUX DE CAPTEUR D'UN SYSTÈME DE MESURE DE LONGUEUR DE BANDE MAGNÉTIQUE

(43) Veröffentlichungstag der Anmeldung: 01.06.2016
(73) Patentinhaber: Balluff GmbH, 73765 Neuhausen (DE)
(72) Erfinder: BURKHARDT, Thomas, 73119 Zelll (DE); ZERN, Achim, 74080 Heilbronn (DE); EVERSMEYER, Timm, 73734 Esslingen (DE)
(74) Vertreter: Jakelski & Althoff Patentanwälte PartG mbB
(86) Internationale Anmeldenummer: PCT/DE2013/000398
(87) Internationale Veröffentlichungsnummer: WO 2015/010669

(56) Entgegenhaltungen:
- EP-A1- 1 630 363
- WO-A2-2010/139964
- DE-A1-102010 010 805

## Beschreibung

Die Erfindung geht aus von einem Verfahren zur Linearisierung von Sensorsignalen eines Magnetband-Längenmesssystems nach der Gattung des unabhängigen Anspruchs.

### Stand der Technik

Auf dem Gebiet der Messtechnik sind gattungsgemäße Längenmesssysteme bekannt geworden, bei denen ein Sensorkopf über einen mit wechselnder Polarität magnetisierten Maßkörper bewegt wird. Durch die Bewegung wird in dem Sensorkopf bzw. Magnetfeldsensor im Idealfall ein sinusförmiges Sensorsignal erzeugt. Je nach magnetischem Messprinzip wiederholt sich der Signalverlauf im Sensorkopf mit jedem Pol des Maßkörpers (z.B. bei GMR- oder AMR-Sensoren, welche das Quadrat der magnetischen Flussdichte B² messen) oder mit jedem Polpaar des Maßkörpers (z.B. bei Hall-Sensoren, welche eine Ausgangsspannung liefern, die proportional zum Produkt aus magnetischer Feldstärke und Strom ist). Die Positionsbestimmung erfolgt in an sich bekannter Weise z.B. mittels trigonometrischer Funktionen.

Aufgrund von unvermeidbaren Toleranzen, z.B. des Maßkörpers oder des Abstandes zwischen dem Sensorkopf und dem Maßkörper, sowie aufgrund von veränderlichen Umgebungsbedingungen (elektrische, magnetische, temperaturbedingte, etc.), kommt es zu ungewollten Linearitätsabweichungen des Messsystems. Weitere mögliche Ursachen für diese Abweichungen sind Bautoleranzen des Maßkörpers oder durch Inhomogenitäten des magnetischen Materials bzw. der Magnetisierung verursachte Toleranzen des durch den Maßkörper erzeugten Magnetfeldes. Auch werden die Linearität bzw. Linearitätsabweichungen des Messsignals durch die im Sensorkopf befindliche bzw. die dem Sensorkopf nachfolgende Elektronik beeinflusst. Im Folgenden werden im Wesentlichen durch den Sensorkopf und konstante äußere Magnetfelder verursachte Linearitätsabweichungen betrachtet.

Zusätzlich weicht das Sensorsignal selbst in der Praxis von einem idealen Sinussignal ab und besitzt insbesondere eine demgegenüber unterschiedliche Amplitude sowie einen unterschiedlichen Offset.

Ferner ist bekannt, zusätzlich zum genannten das Sinussignal erfassenden Sensor in dem Sensorkopf einen zweiten Sensor anzuordnen, mittels dessen auch ein gegenüber dem Sinussignal um 90° phasenverschobenes Kosinussignal erfasst wird. Mittels des zweiten Sensors wird bekanntermaßen die Eindeutigkeit des Messsignals innerhalb einer Messperiode gewährleistet, da nur die Kombination aus einem Sinussignal und einem Kosinussignal eine eindeutige Auswertung des Messsignals innerhalb einer Periode zulässt.

Es ist anzumerken, dass der erste Sensor und der zweite Sensor voneinander im Abstand einer Phasenverschiebung von 90° angeordnet sein können, wobei die beiden Sensoren in der gleichen Richtung sensitiv sind. Alternativ oder zusätzlich kann vorgesehen sein, dass die beiden Sensoren in zwei um 90° gegeneinander verdrehte Richtungen sensitiv sind. Durch Erfassung eines Sinussignals und eines Kosinussignals kann zudem ein Winkelsensor realisiert werden.

Die beiden Sensorsignale werden einem sogenannten "Interpolator" zugeführt, welcher in an sich bekannter Weise den Offset, die Amplitude und die Phase des Sinussignals sowie des Kosinussignals kompensiert. Dies erfolgt entweder statisch durch einen einmaligen Kalibriervorgang bzw. durch Erstellen einer Korrekturtabelle anhand eines Referenzsystems noch während der Herstellung des Sensors bzw. Längenmesssystems, oder aber dynamisch, wobei während der Bewegung des Sensorkopfes die internen Verstärkungs- und Offsetparameter so variiert werden, dass für die weitere Verarbeitung möglichst ideale Sensorsignale gebildet werden.

Aufgrund der beiden phasenverschobenen Sensorsignale stellt auch der Betrag der Phasenverschiebung gegenüber den idealen 90° eine Einflussgröße auf die Linearität dar, welche ebenfalls durch einen genannten Interpolator kompensiert werden kann.

Darüber hinaus ist auch bekannt, durch Oberwellen des erfassten Sensorsignals hervorgerufene Linearitätsabweichungen auszugleichen. So lassen sich diese Oberwellen bereits im Magnetfeldsensor durch besondere Anordnung der magnetischen Strukturen kompensieren. Bei großen Polbreiten werden die Oberwellen durch den Einsatz mehrerer Winkelsensoren sowie gewichtete Auswertung der Messdaten reduziert.

Alternativ lassen sich unterschiedliche Amplituden, unterschiedliche Offsets, Phasenabweichungen von etwa 90° sowie Oberwellen dadurch kompensieren, dass innerhalb einer Polperiode zu einer bereits bestimmten Position ein polperiodisches Korrektursignal aufaddiert wird. Ein geeignetes Korrektursignal kann z.B. an einem Referenzsystem im Vorfeld ermittelt werden. Die so bestimmten Positionsdaten werden durch eine nachfolgende Korrekturtabelle in linearisierte Positionsdaten umgewandelt. Da es sich hierbei um ein statisches Korrektursignal handelt, setzt diese Art der Kompensation nachteilig voraus, dass die obigen Abweichungen bezüglich Amplitude, Offset, Phase und dem Oberwellenanteil im Signalverlauf des Magnetfeldsensors im Wesentlichen konstant bleiben. Zudem sollte die Linearitätsabweichung nicht durch den Luftspalt zwischen Sensorkopf und Maßkörper oder die Sensortemperatur beeinflusst werden. Da dieser Einfluss aber bei den meisten Sensoren gegeben ist, ist eine genannte statische Kompensation in vielen Fällen nicht möglich. Weiter ist aus der WO 20107139964 A2 bekannt, in einer Positionsmessvorrichtung aus einer aktuell gemessenen Geschwindigkeit und der aktuellen Position eine zu erwartende Position für die nächste Messung zu bestimmen. Diese kann dann zur Korrektur der tatsächlichen Messung herangezogen werden.

### Offenbarung der Erfindung

Der Erfindung liegt die Aufgabe zugrunde, die genannten Nachteile bekannter Magnetband-Längenmesssysteme auszuräumen und eine dynamische Kompensation von eingangs beschriebenen Nichtlinearitäten von Magnetfeldsensoren zu ermöglichen.

Das erfindungsgemäße Verfahren ermöglicht die Kompensation genannter Nichtlinearitäten im Betrieb des Messsystems, d.h. während der Bewegung des Sensorkopfes entlang des Maßkörpers. Daher kann eine geringe Anzahl von Sensoren bzw. preiswertere Sensoren eingesetzt werden, worüber ein solches Längenmesssystem wesentlich kostengünstiger herstellbar ist als im Stand der Technik bekannte Messsysteme. Darüber hinaus kann bei der Fertigung der Sensoren auf eine aufwendige Kalibrierung verzichtet werden.

Besondere Vorteile ergeben sich bei solchen Messsystemen, bei denen die Verfahrgeschwindigkeit des Sensorkopfes regelbar ist und bei denen ein relativ großer Luftspaltbereich gefordert ist. Aufgrund des größeren Luftspaltes müssen entsprechend größere Polbreiten genutzt werden.

Ferner ermöglicht die Erfindung den Einsatz eines einheitlichen Sensortyps bei verschiedenen Polbreiten. Sollte z.B. ein größerer Luftspalt benötigt werden, ist es lediglich erforderlich, auf einen Maßkörper mit größerer Polbreite zu wechseln. Denn dadurch ändert sich insbesondere die Phase zwischen den beiden Sensoren (Sinus und Kosinus), was bei der Auswertung anhand des vorgeschlagenen Kompensationsverfahrens allerdings keine Rolle spielt. Durch Änderung der Polbreite ändert sich zudem die Auflösung der Ausgangssignale.

Bei Linearantrieben kann auf den Maßkörper ganz verzichtet werden und nur das Magnetfeld des Stators zur Wegmessung genutzt werden. Dies bietet einen erheblichen Kostenvorteil.

Die Erfindung ermöglicht zudem bei einer genannten Kompensation von Linearitätsabweichungen, Oberwellen des erfassten Sensorsignals und/oder den Winkeloffset des Sensorsignals so zu berücksichtigen, dass eine dynamische Anpassung dieser Einflussgrößen unabhängig von der Verfahrgeschwindigkeit bzw. Konstanz der Verfahrgeschwindigkeit des Sensorkopfes durchgeführt werden kann.

Die Erfindung ermöglicht ferner, eine genannte Korrekturtabelle dynamisch, d.h. auch während einer laufenden Messung, ständig anzupassen, und zwar mit einer gegenüber dem Stand der Technik deutlich verringerten Rest-Linearitätsabweichung.

Das erfindungsgemäße Längenmesssystem eignet sich zur hochpräzisen Längenmessung insbesondere bei Linearantrieben, Laser-Schneidanlagen, Drucksystemen, im Maschinenbau, bei Stanzen und Drehtischen, mit den hierin beschriebenen Vorteilen.

### Kurzbeschreibung der Figuren

- Figur 1: zeigt schematisch eine isometrische Ansicht eines Magnetband-Längenmesssystems gemäß dem Stand der Technik;
- Figur 2: zeigt ein Blockdiagramm zur Illustration der Korrektur einer oberwellenbedingten Linearitätsabweichung gemäß dem Stand der Technik;
- Figur 3a, b: zeigen bei kleinem Luftspalt simulierte Sensorsignale mit einer relativ großen Linearitätsabweichung;
- Figur 4a, b: zeigen bei großem Luftspalt simulierte Sensorsignale mit einer relativ kleinen Linearitätsabweichung;
- Figur 5a - c: zeigen ein Ausführungsbeispiel der erfindungsgemäßen Vorgehensweise zur Linearisierung eines Sensorsignals gemäß Figur 3a sowie eine aus der Figur 5b sich ergebende linear interpolierte Korrekturkurve (Figur 5c);
- Figur 6: zeigt ein Ausführungsbeispiel des erfindungsgemäßen Verfahrens zur dynamischen Linearisierung von Sensorsignalen eines Magnetband-Längenmesssystems anhand eines Flussdiagramms;
- Figur 7a, b: zeigen eine den Figuren 5b und 5c ähnliche Korrekturkurve im Fall einer verzögerten Bewegung des Sensorkopfs;
- Figur 8a, b: illustrieren eine Messsituation, bei der der Abstand zweier Sensoren des Sensorkopfs nicht genau 90° beträgt;
- Figur 9: illustriert eine Messsituation, bei der die Messsignale zweier Sensoren des Sensorkopfs um weniger als 90° gegeneinander phasenverschoben sind;
- Figur 10: zeigt die Signalverhältnisse am Beispiel eines durch ein Statorfeld eines Linearmotors gebildeten Maßkörpers.

### Detaillierte Beschreibung der Ausführungsbeispiele

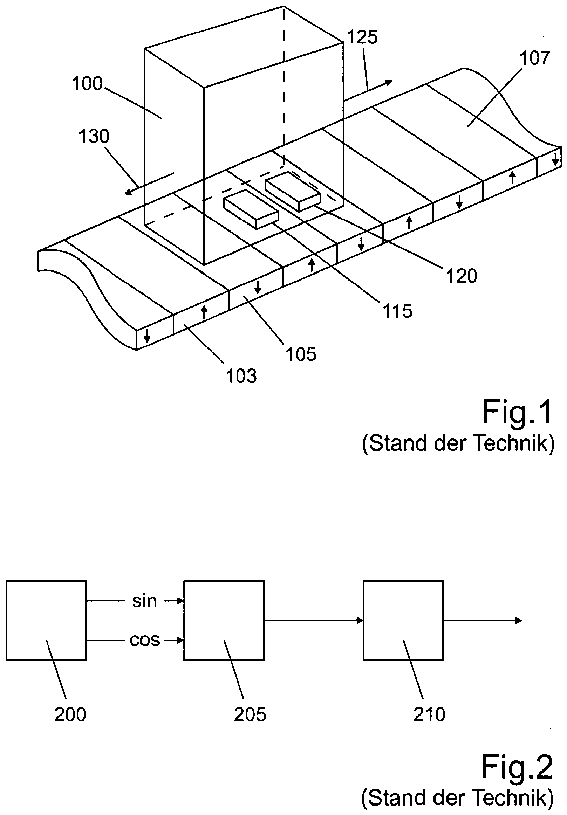

Das in Figur 1 gezeigte berührungslose Magnetband-Längenmesssystem umfasst einen Sensorkopf 100 und einen magnetisch kodierten Magnetband-Maßkörper 107. In einem Abstand von etwa 2 bis 6 mm gleitet der Sensorkopf 100 über den in Messrichtung 125, 130 mit abwechselnder Polarität 103, 105 magnetisierten Maßkörper 107. Der Sensorkopf 100 umfasst in dem Ausführungsbeispiel zwei Sensorelemente 115, 120.

Bei einer Bewegung des Sensorkopfs 100 in Richtung 125, 130 der sich ändernden Polarität wird in den beiden Sensorelementen 115, 120 jeweils ein Signal erzeugt, welches im Idealfall sinusförmig verläuft, wobei das erste Sensorelement 115 ein Sinussignal erfasst und wobei das zweite Sensorelement 120 ein gegenüber dem Sinussignal um 90° phasenverschobenes Kosinussignal erfasst. Mittels einer an sich bekannten Auswerteelektronik werden die sich ergebenden Periodenwechsel gezählt bzw. die Position der Sensorelemente 115, 120 innerhalb einer Periode bestimmt.

Je nach magnetischem Messprinzip entspricht die Periodendauer des erzeugten Signals der Länge eines Pols, z.B. bei GMR- oder AMR-Sensoren, die B² messen. Bei z.B. Hall-Sensoren, die B messen, entspricht die Signalperiode hingegen der Länge eines Polpaars. Die Verfahrgeschwindigkeit des Sensorkopfes beträgt bis zu 20 m/s, wobei trotz der genannten relativ großen Abstände von bis zu 6 mm die Messauflösung in der Verfahrrichtung des Sensorkopfs im Bereich von bis zu 100 µm liegt.

Auch bei Vorhandensein eines (nicht gezeigten) konstanten externen Magnetfelds beträgt die Länge der Signalperiode ein Polpaar, da die Felder der Nord- und Südpole 103, 105 des Maßkörpers 107 von dem externen Magnetfeld unterschiedlich beeinflusst werden. Damit besitzt auch die Linearitätsabweichung einen entsprechend periodischen Anteil.

Die Linearitätsabweichung ändert sich, je nach verwendetem Sensor und Polbreite, signifikant mit dem Abstand zwischen Sensorkopf und Maßkörper, d.h. mit der Größe des Luftspalts. Ändern sich die äußeren magnetischen Verhältnisse z.B. aufgrund von Störfeldern nur geringfügig und sind die Pole im Wesentlichen gleich stark magnetisiert, dann ist der Signalverlauf in einer darauffolgenden Periode dem vorherigen Signalverlauf sehr ähnlich.

Die Figur 2 zeigt anhand eines Blockdiagramms eine an sich bekannte Vorgehensweise zur Korrektur einer oberwellenbedingten Linearitätsabweichung. Ein die beiden Sensorelemente 115, 120 aufweisender Magnetfeldsensor 200 liefert die genannten Sinus- und Kosinussignale. Diese Signale werden einem Interpolator 205 zugeführt, welcher (eventuell unter Berücksichtigung von Offset, Phase und Amplitude der Signale) noch Oberwellen enthaltende Positionsdaten berechnet. Diese Positionsdaten werden mittels einer Korrekturtabelle 210 linearisiert, womit am Ausgang der Korrekturtabelle linearisierte Positionsdaten vorliegen. Diese Positionsdaten weisen keine vorbeschriebene, nachteilige Abweichung von der Linearität auf.

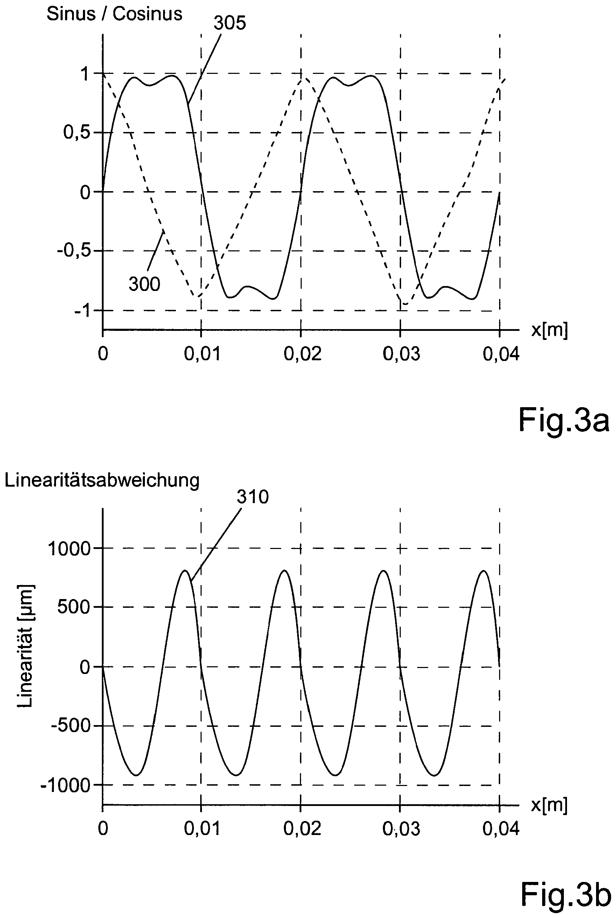

In den Figuren 3a und 3b sind beispielhafte, durch eine Simulationsrechnung erzeugte sinus- und kosinusförmige Magnetfeldsensorsignale 300, 305 (Figur 3a) mit einem sehr hohen und jeweils unterschiedlichen Oberwellenanteil über dem Weg x[m] dargestellt. Diese Verhältnisse ergeben sich in der Realität bei relativ langen Polen und bei relativ geringem Luftspalt. Entsprechend groß ist die daraus entstehende, in der Figur 3b gezeigte Linearitätsabweichung 310, welche, wie bereits erwähnt, selbst periodisch ist.

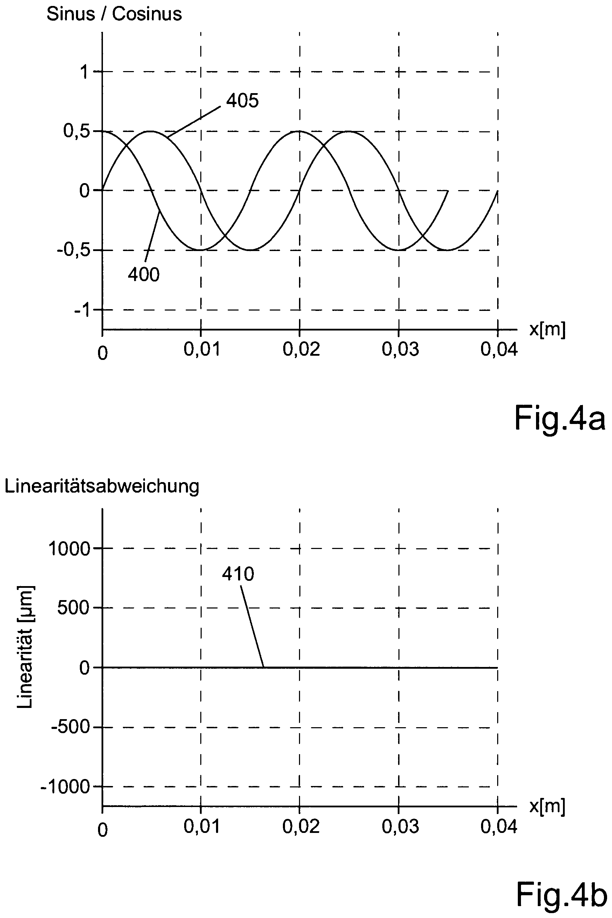

In den Figuren 4a und 4b sind entsprechende Ergebnisse der genannten Simulationsrechnung an einem an sich identischen Sensor dargestellt, welcher lediglich einen gegenüber den Figuren 3a und 3b größeren Luftspalt aufweist. Die sich bei dieser Sensor-Konfiguration ergebenden Sensorsignale 400, 405 (Figur 4a) sind nahezu ideal sinusförmig bzw. kosinusförmig, lediglich die Signalamplitude ist geringer als in dem Beispiel gemäß Figuren 3a und 3b. Insbesondere ist die daraus abgeleitete Linearitätsabweichung 410, wie in der Figur 4b zu ersehen, sehr gering bzw. nahezu konstant null.

Gemäß den Figuren 3a und 3b sowie 4a und 4b sind die sich ergebenden Sensorsignale sehr empfindlich abhängig von der Größe des Luftspalts zwischen Sensorkopf und Maßkörper. Insbesondere lassen sich die entsprechenden Linearitätsabweichungen nicht mittels einer statischen bzw. fixen Korrekturtabelle korrigieren.

In dem nachfolgend beschriebenen Ausführungsbeispiel wird angenommen, dass der Sensorkopf mit relativ konstanter hoher Geschwindigkeit verfahren wird. Die von sämtlichen Polpaaren erzeugten Magnetfelder seien identisch und der Luftspalt zwischen Sensorkopf und Maßkörper ändere sich nur sehr langsam von Pol zu Pol, so dass die in den Figuren 3a und 3b sowie 4a und 4b gezeigte Variation nur über mehrere Pole erfolgt, wodurch der Signalverlauf eines aktuell gemessenen Pols ähnlich zum Signalverlauf des vorherigen und des nächsten Pols ist.

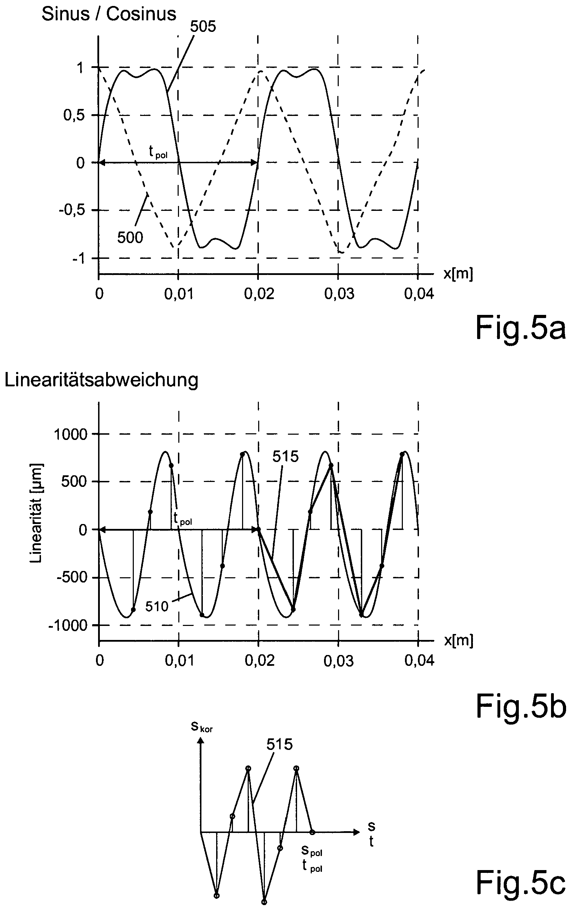

Die Figuren 5a und 5b zeigen ein Ausführungsbeispiel des erfindungsgemäßen Verfahrens zur Linearisierung eines in der Figur 3a gezeigten Sensorsignals. Aus dem vom Sensorkopf erfassten Sinus- 500 und Kosinus-Signal 505 lässt sich die Periode des Maßkörpers ableiten. Aus der Zeit zum Überfahren eines Pols, welcher einer Periode entspricht, lässt sich demnach die Periodendauer tₚₒₗ, ermitteln. Ist der Wert von tₚₒₗ relativ klein und ändert sich beim Überfahren zwischen aufeinanderfolgenden Polen nur geringfügig, dann kann davon ausgegangen werden, dass sich der Sensorkopf mit relativ hoher und konstanter Geschwindigkeit bewegt. Eine solche Situation liegt diesem Ausführungsbeispiel zugrunde.

Während der genannten Periodendauer tₚₒₗ, wird die Positionsdifferenz zwischen einer interpolierten Position, welche einer angenommenen tatsächlichen Position entspricht, und einer konstant angenommenen Bewegung mit V_{const}=Polperiode/tₚₒₗ n mal, in dem vorliegenden Beispiel siebenmal, gemessen. Bei einer konstanten Geschwindigkeit entsprechen die sich ergebenden Positionsdifferenzwerte sieben Stützpunkten der Linearitätsabweichung 510, welche äquidistant angeordnet sind. Durch Differenzbildung mit der interpolierten Position wird in dem Ausführungsbeispiel eine linear interpolierte Korrekturkurve bzw. Stützkurve 515 (siehe rechter Teil in Figur 5b) generiert.

Die Figur 5c, in der Wegkorrekturwerte sₖₒᵣ über dem Weg s (Verfahrweg des Sensorkopfs) bzw. der Zeit t (Verfahrzeit des Sensorkopfs) aufgetragen sind, zeigt zur vereinfachten Darstellung nur eine vorbeschriebene Stützkurve 515. Es ist anzumerken, dass bei wie in dem vorliegenden Ausführungsbeispiel konstant angenommener Geschwindigkeit des Sensorkopfs die in Figur 5c dargestellte Korrekturkurve 515 sowohl bei der Darstellung über dem Weg s (gestrichelte senkrechte Balken in Figur 5c) als auch bei der Darstellung über der Zeit t (punktierte Linien in Figur 5c) identisch bzw. übereinstimmend ist. Wie anhand der Figur 2 beschrieben, wird die Stützkurve 515 in Echtzeit zu der Position des jeweils nachfolgenden Pols addiert.

Es ist hervorzuheben, dass die beschriebene lineare Interpolation nur ein Ausführungsbeispiel darstellt und die Interpolation auch mittels einer quadratischen, sinusförmigen oder auf einem Polynom beruhenden Kurve erfolgen kann. Der Vorteil der linearen Methode sind die relativ geringen technischen und damit auch kostentechnischen Aufwendungen bei der Implementierung.

Bei genügend großer Anzahl von Stützpunkten und, wie bei diesem Ausführungsbeispiel wie oben beschrieben vorausgesetzt, relativ geringer Änderung der Linearität und Geschwindigkeit, lässt sich anhand dieser Vorgehensweise im jeweils nachfolgenden Pol relativ präzise die tatsächliche Position bestimmen und damit die resultierende Linearitätsabweichung erheblich reduzieren.

Das beschriebene Verfahren ermöglicht daher eine dynamische Linearisierung im Echtzeitbetrieb des Sensorsystems 100, 115, 120, da die Anpassung bzw. der Ausgleich von Linearitätsabweichungen während der Bewegung des Sensorkopfs 100 zwischen den einzelnen Polen des Maßkörpers 107 sozusagen sukzessive bzw. "inkrementell" von Pol zu Pol erfolgt. Es ist dabei insbesondere vorteilhaft, wenn sich während der Bewegung des Sensorkopfs 100 der Verlauf der Linearitätsabweichung, z.B. durch Änderung des Luftspalts oder der Temperatur bedingt, nur in dem genannten geringen Ausmaß ändert, d.h. über mehrere Perioden hinweg sich nur relativ langsam ändert.

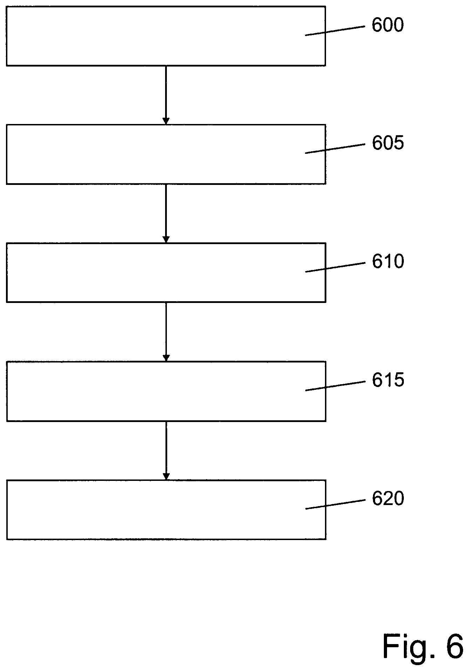

Die entsprechenden Verfahrensschritte des zuvor beschriebenen Verfahrens sind in Figur 6 anhand eines Flussdiagramms dargestellt. Zunächst wird die Periodendauer tₚₒₗ gemessen und die Abtastzeitpunkte für die nächste Periode bestimmt 600. Aus diesen Werten wird die mittlere Geschwindigkeit über einen einzelnen Pol bzw. eine einzelne Polperiode gemäß der Gleichung vₘᵢₜₜₑₗ=Sₚₒₗ/tₚₒₗ berechnet 605, wobei sₚₒₗ die genannte Länge eines Pols bzw. Polpaares und tₚₒₗ die Zeit zum Durchfahren eines Pols bzw. Polpaares (d.h. die genannte Periodendauer) bezeichnen. Zu jedem wie oben bestimmten Abtastzeitpunkt der nächsten Periode wird die Position des Sensorkopfes gemessen und abgespeichert 610. Aus diesen Daten wird bei der angenommenen konstanten Bewegung mit der berechneten Geschwindigkeit vₘᵢₜₜₑₗ die beschriebene Stützkurve (als Korrekturkurve der Linearitätsabweichung) bestimmt 615. Mittels der aus der vorhergehenden Periode ermittelten Stützkurve wird die Position der darauffolgenden Periode korrigiert 620, z.B. im Wege einer linearen Interpolation über die in der Figur 5c gezeigten Stützpunkte.

Bei den nachfolgend beschriebenen Ausführungsbeispielen wird vorausgesetzt, dass der Sensorkopf, im Gegensatz zu den vorher beschriebenen Ausführungsbeispielen, mit relativ geringer Geschwindigkeit verfahren wird. Alternativ oder zusätzlich kommt es dabei zu Geschwindigkeitsänderungen.

Bei langsamen Verfahrgeschwindigkeiten oder einem Stillstand des Sensorkopfs werden die Stützpunkte nicht neu bestimmt, sondern die zuletzt bestimmten Stützpunkte werden vorerst weiter verwendet, da die Sensorsignale sich nicht nennenswert ändern, solange sich der Abstand des Sensorkopfs vom Maßkörper nicht deutlich ändert. Die Vorgehensweise entspricht daher der bei der statischen Linearisierung gemäß Figur 2.

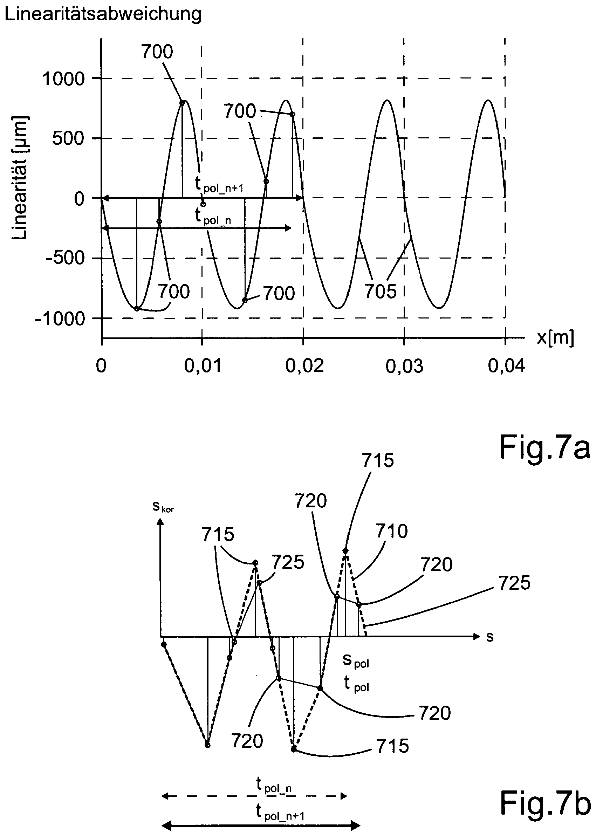

Im Folgenden wird angenommen, dass sich die Verfahrgeschwindigkeit des Sensorkopfs konstant ändert, wobei die daraus resultierende quadratische Änderung des Weges linear angenähert werden kann. Wie aus den Figuren 7a und 7b zu ersehen, kann erst nach Ablauf einer Messperiode festgestellt werden, dass sich die Geschwindigkeit geändert hat, denn nach den vorliegenden sieben zeitlich äquidistanten Abtastungen 700 und der sich daraus ergebenden Linearitätsabweichung 705 ist die volle Periode bei den sin/cos-Signalen noch nicht erreicht, d.h. die Größe sₚₒₗ entspricht nicht mehr der Größe tₚₒₗ. Aus diesem Grund ist auch die in der Figur 7b gezeigte Korrekturkurve 710 nicht mehr korrekt, jedoch kann die Korrekturkurve nachträglich nicht mehr angepasst werden.

Um an die geänderte Verfahrgeschwindigkeit anzupassen wird in der nachfolgenden Messperiode die Korrekturkurve durch Bildung neuer Stützpunkte entsprechend gestreckt (Figur 7b). Dazu werden zunächst die Stützpunkte 715 der inkorrekten Korrekturkurve linear interpoliert. Die so gebildete Kurve 710 entspricht somit dem tatsächlichen Linearitätsverlauf während der vergangenen Periode. Aufgrund der geringeren Verfahrgeschwindigkeit passen die Kurvenpunkte zunehmend nicht mehr auf die zeitlich äquidistanten Messwerte. Damit sind die Abtastpunkte nicht mehr gleichmäßig auf die Periode verteilt.

Zur Bestimmung der neuen Stützpunkte 720 für die nachfolgende Periode werden aus den Stützpunkten 715 der bestehenden Korrekturkurve mit t_{pol_n} die Punkte für die nachfolgende Periode tₚₒₗ_ₙ₊₁ ermittelt. Dazu wird zwischen den bestehenden Stützpunkten 715 linear interpoliert. Die dadurch gebildete Kurve wird äquidistant über die Zeitdauer t_{pol_n+1} abgetastet. Über diese sich dabei ergebenden Punkte wird wiederum eine lineare Korrekturkurve 725 gelegt, welche in der nachfolgenden Periode verwendet wird. Alternativ kann auf der Grundlage der sich ändernden Periodendauer zwischen der letzten und der aktuellen Messung auf die nächste Periodendauer geschlossen werden und die Abtastzeitpunkte, sozusagen in der Weise einer Geschwindigkeitsextrapolation, entsprechend gewählt werden.

Es ist anzumerken, dass mit steigender Anzahl von Abtastpunkten (d.h. mehr als die vorliegend sieben Abtastpunkte) die frühere Korrekturkurve und die neu bestimmte Korrekturkurve zunehmend übereinstimmen, d.h. umso geringer ist der Korrekturfehler. Ferner ist es zweckmäßig, Stützpunkte über wenigstens zwei elektrische Perioden aufzunehmen, da im Fall von konstanten Störungen erst zwei Perioden einen magnetischen Nordpol und einen magnetischen Südpol abdecken. Da die über diese beiden Pole erfassten elektrischen Signale gleich sind, besitzt die Linearitätsabweichung die Periodizität eines magnetischen Pols. Im Fall, dass ein konstantes äußeres Magnetfeld überlagert ist, sind die an einem Nordpol und an einem Südpol gemessenen Signale verschieden, sodass in diesem Fall die Linearitätsabweichung die Periodizität zweier magnetischer Pole, d.h. die Periodizität eines Polpaars, besitzt. Wie bereits erwähnt, stellt sich auch bei polaritätsempfindlichen Sensoren, wie z.B. Hallsensoren, eine elektrische Periodizität von zwei magnetischen Polen ein.

Bei einer weiteren Verzögerung der Verfahrgeschwindigkeit entsteht wieder eine ähnliche Abweichung wie oben, welche dann entsprechend angepasst wird. Durch sukzessive weiter erfolgende Bildung von angepassten Korrekturkurven wird daher eine dynamische Anpassung von Linearitätsabweichungen ermöglicht.

Mittels der beschriebenen Methode lassen sich nicht-ideale Eigenschaften der erfassten sin- und cos-Signale, wie z.B. den Offset, die Amplitude, Oberwellen und/oder die Phasenverschiebung betreffende Eigenschaften, kompensieren. Je größer der Luftspalt zwischen Sensorkopf und Maßkörper ist, umso größer muss die Polbreite sein. Idealerweise beträgt der elektrische Abstand zwischen dem sin-Signal und dem cos-Signal 90°. Da das erfindungsgemäße Verfahren auch die Kompensation einer Phasenverschiebung ermöglicht, können Maßkörper unterschiedlicher Breite mit einem einzigen Sensorkopf verwendet werden, wobei der Sensorkopf bevorzugt ein Magnetfeldsensorpaar mit festem Abstand zwischen den beiden Sensoren aufweist. In diesem Fall ist die Phasenbeziehung der sich beiden ergebenden Signale nicht mehr 90°.

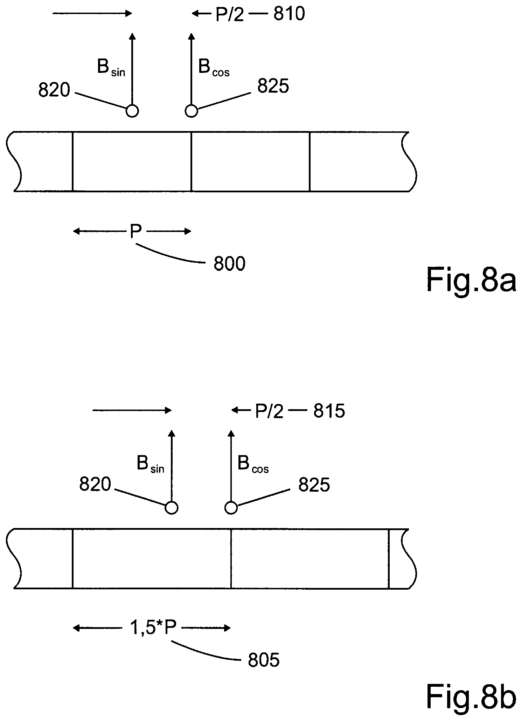

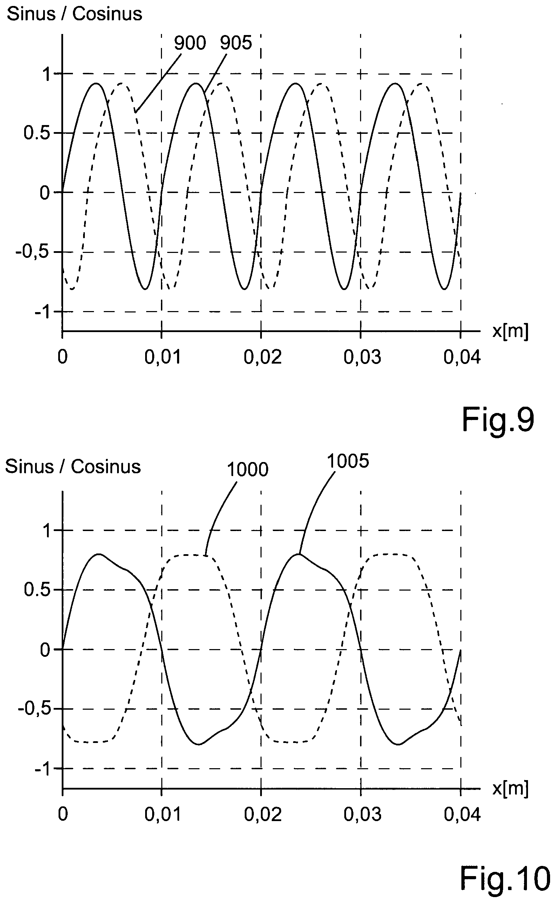

Dies soll anhand der Figuren 8a und 8b verdeutlicht werden, in denen zwei Messsituationen dargestellt sind, in denen die jeweilige Polbreite 800, 805 unterschiedlich ist. In der Figur 8a entspricht der Abstand 810 zwischen den beiden Sensorelementen 820, 825 genau einer halben Polbreite, d.h. bei Sensoren, die B² messen, beträgt der elektrische Abstand der Messsignale genau 90°. Dahingegen ist in der Figur 8b die Polbreite 805 um 50% erhöht, jedoch bleibt der Abstand 815 zwischen den beiden Sensorelementen 820, 825 gleich. Daher ist die gemessene (elektrische) Phase <90°. In der Figur 9 sind bei diesen elektrischen Verhältnissen sich ergebende Sensorsignale 900, 905 dargestellt. Mit dem beschriebenen Verfahren zur dynamischen Anpassung von Linearitätsabweichungen lassen sich bei beiden Maßkörpern (Figur 8a und Figur 8b) mit dem gleichen Sensorkopf Messungen ohne Einbußen bei der Linearitätsabweichung durchführen.

Es ist anzumerken, dass die aktuell gültigen Stützpunkte permanent gespeichert werden können um somit nach einem Ausschalten des Messsystems wieder zur Verfügung zu stehen. Falls sich zwischenzeitlich die magnetischen Verhältnisse nicht wesentlich geändert haben, kann nach dem Wiedereinschalten ein ausreichend genaues Messsignal erfasst und ausgegeben werden.

Es ist ferner anzumerken, dass sich mit dem erfindungsgemäßen Verfahren die Anforderungen an die Qualität der Sensorsignale und damit auch die technischen Anforderungen an den Maßkörper reduziert werden können. Der Maßkörper muss nur noch ein sich periodisch änderndes Magnetfeld liefern, d.h. entweder S-N-Pole im Wechsel oder magnetisch gleichsinnige Pole mit wechselnder Feldstärke,; dabei darf sich das Magnetfeld zwischen zwei benachbarten Polen bezüglich einer oder mehreren der genannten Einflussgrößen Offset, Amplitude, Phase oder Oberwellen sogar geringfügig ändern. Diese Bedingungen sind z.B. bei einem Statorfeld eines Linearmotors erfüllt, sodass das Statorfeld selbst zur Positionsbestimmung genutzt werden kann, wodurch aus Kostengründen auf einen vorbeschriebenen Maßkörper sogar gänzlich verzichtet werden kann. Allerdings wird die Messgenauigkeit dabei wesentlich durch die Positionierung und Magnetisierung der Stator-Magnete bestimmt. In der Figur 10 sind die dabei zu erwartenden Signale 1000, 1005 dargestellt. Wie aus der Figur 10 zu ersehen, ist die Phasenverschiebung zwischen dem sin-Signal und dem cos-Signal nicht genau 90° und zudem sind deutlich erkennbare Oberwellen vorhanden.

## Patentansprüche

1. Verfahren zur Korrektur von periodischen Linearitätsfehlern eines Magnetband-Längenmesssystems, bei dem ein Sensorkopf (100) entlang von magnetischen Polen (103, 105) eines periodischen Maßkörpers (107) verfahren wird, **dadurch gekennzeichnet, dass** während der Bewegung des Sensorkopfs (100) entlang des Maßkörpers (107) aus einer mit dem Sensorkopf (100) gemessenen Position (500, 505) die Periodendauer (tₚₒₗ) eines magnetischen Pols oder Polpaars (103, 105) ermittelt wird, dass während der ermittelten Periodendauer (tₚₒₗ) anhand einer Positionsdifferenz zwischen einer gemessenen Position (500, 505) und einer theoretischen, aus einer als im Wesentlichen konstant angenommenen Verfahrgeschwindigkeit des Sensorkopfs (100) ermittelten Position durch n Messungen der Position (500, 505) eine Abweichungskurve (515) bestimmt wird, und dass auf der Grundlage der so bestimmten Abweichungskurve (515) die Position der darauffolgenden Periode korrigiert wird (620), so dass periodische Linearitätsfehler des Magnetband-Längenmesssystems im Betrieb des Magnetband-Längenmesssystems dynamisch korrigiert werden.

2. Verfahren nach Anspruch 1, **dadurch gekennzeichnet, dass** Linearitätsfehler in einer aktuellen Periode durch Addition einer in einer jeweils vorhergehenden Periode ermittelten Abweichungskurve (515) ausgeglichen werden.

3. Verfahren nach Anspruch 1 oder 2, **dadurch gekennzeichnet, dass** die Abweichungskurve (515) während des Verfahrens des Sensorkopfs (100) zwischen den Polen (103, 105) des Maßkörpers (107) von Pol zu Pol oder von Polpaar zu Polpaar berechnet wird.

4. Verfahren nach einem der vorhergehenden Ansprüche, **dadurch gekennzeichnet, dass** die Abweichungskurve (515) als eine durch Stützpunkte gebildete Stützpunktkurve erzeugt wird.

5. Verfahren nach Anspruch 4, **dadurch gekennzeichnet, dass** die Abweichungskurve (515) durch lineare Interpolation zwischen den Stützpunkten erzeugt wird.

6. Verfahren nach Anspruch 5, **dadurch gekennzeichnet, dass** die durch lineare Interpolation erzeugte Abweichungskurve (515) zu einer im laufenden Betrieb des Magnetband-Längenmesssystems gemessenen Position eines jeweils nachfolgenden magnetischen Pols (103, 105) addiert wird.

7. Verfahren nach einem der Ansprüche 4 bis 6, **dadurch gekennzeichnet, dass** Stützpunkte (715) einer infolge einer Geschwindigkeitsänderung beim Verfahren des Sensorkopfs (100) inkorrekten theoretischen Position nicht berücksichtigt werden und dass neue Stützpunkte (720) der Abweichungskurve für eine nachfolgende Periode aus den Stützpunkten (715) der bestehenden Abweichungskurve erzeugt werden.

8. Verfahren nach Anspruch 7, **dadurch gekennzeichnet, dass** die neuen Stützpunkte (720) der Abweichungskurve durch Interpolation zwischen den bestehenden Stützpunkten (715) erzeugt werden, wobei aus mittels äquidistanter Abtastung gewonnenen Punkten eine Abweichungskurve (725) erzeugt wird, welche in der nachfolgenden Periode verwendet wird.

## Claims

1. Method for correction of periodic linearity errors of a magnetic strip measuring system, in which a sensor head (100) is moved along magnetic poles (103, 105) of a periodic measurement body (107), **characterised in that** during the movement of the sensor head (100) along the measurement body (107), the periodic time (tₚₒₗ) of a magnetic pole or a pole pair (103, 105) is determined from a position (500, 505) measured by the sensor head (100), that during the determined periodic time (tₚₒₗ), a deviation curve (515) is determined based on a difference of positions between the measured position (500, 505) and a theoretical position determined from a movement speed assumed to be essentially constant by n measurements, and that based on the so determined deviation curve (515), the position of the subsequent period is corrected (620), so that periodic linearity errors of the magnetic strip measuring system are corrected dynamically during operation of the magnetic strip measuring system.

2. Method according to claim1, **characterised in that**, linearity errors are compensated in the current period by addition of a deviation curve (515) determined in the respectively preceding period.

3. Method according to claim 1 or 2, **characterised in that** the deviation curve (515) is calculated during the movement of the sensor head (100) between the poles (103, 105) of the measurement body (107) from pole to pole, or from pole pair to pole pair.

4. Method according to any of the preceding claims, **characterised in that** the deviation curve (515) is generated by as support point curve formed by support points.

5. Method according to claim 4, **characterised in that** the deviation curve (515) is generated by linear interpolation between the support points.

6. Method according to claim 5, **characterised in that** the deviation curve (515) generated by linear interpolation is added to a position of the respectively subsequent pole measured during operation of the magnetic strip measuring system.

7. Method according to any of the claims 4 to 6, **characterised in that** support points (715) of a theoretical position, which is incorrect as a consequence of a speed change during movement of the sensor head (100), are not considered and that new support points (720) of the deviation curve for a subsequent period are generated from the support points (715) of the existing deviation curve.

8. Method according to claim 7, **characterised in that** the new support points (720) of the deviation curve are generated by interpolation between the existing support points (715), wherein a deviation curve (725) is generated from points obtained by means of equidistant scanning, which is used in the subsequent periods.

## Revendications

1. Procédé de correction d'erreurs de linéarité périodiques d'un système de mesure de longueur de bande magnétique, chez lequel une tête de capteur (100) effectue un déplacement le long de pôles (103, 105) magnétiques d'un corps de mesure (107) périodique, **caractérisé en ce que**, pendant le déplacement de la tête de capteur (100) le long du corps de mesure (107), la durée de la période (tₚₒₗ) d'un pôle magnétique ou d'une paire de pôles (103, 105) est évaluée à partir d'une position (500, 505) mesurée avec la tête de capteur (100), que, pendant la durée de période (tₚₒₗ) évaluée, une courbe de décalage (515) est déterminée à l'aide d'une différence de position entre une position mesurée (500, 505) et une position théorique, déterminée à partir d'une vitesse de déplacement de la tête de mesure (100), admise comme étant essentiellement constante, par n mesures de la position (500, 505) et que, sur la base de la courbe de décalage (515) ainsi déterminée, la position de la période suivante est corrigée (620) de sorte que des erreurs de linéarité périodique du système de mesure de longueur de bande magnétique sont corrigées de manière dynamique dans la mise en oeuvre du système de mesure de longueur de bande magnétique.

2. Procédé selon la revendication 1, **caractérisé en ce que** des erreurs de linéarité dans une période en cours sont compensées par une addition d'une courbe de décalage (515) évaluée dans une période précédente respective.

3. Procédé selon la revendication 1 ou 2, **caractérisé en ce que** la courbe de décalage (515) est calculée pendant le déplacement de la tête de mesure (100) entre les pôles (103, 105) du corps de mesure (107) de pôle à pôle ou d'une paire de pôles à une paire de pôles.

4. Procédé selon l'une des revendications précédentes, **caractérisé en ce que** la courbe de décalage (515) est générée par une courbe de points de repère formée par des points de repère.

5. Procédé selon la revendication 4, **caractérisé en ce que** la courbe de décalage (515) est générée par une interpolation linéaire entre les points de repère.

6. Procédé selon la revendication 5, **caractérisé en ce que** la courbe de décalage (515) générée par l'interpolation linéaire est additionnée à une position mesurée pendant le déplacement en cours du système de mesure de longueur de bande magnétique d'un pôle (103, 105) magnétique respectivement successif.

7. Procédé selon l'une des revendications 4 à 6, **caractérisé en ce qu'**il n'est pas tenu compte de points de repère (715) d'une position théorique incorrecte à la suite d'une modification de vitesse lors du déplacement de la tête de capteur (100) et que de nouveaux points de repère de la courbe de décalage (720) sont générés pour une période ultérieure à partir des points de repère (715) de la courbe de décalage présente.

8. Procédé selon la revendication 7, **caractérisé en ce que** les nouveaux points de repère de la courbe de décalage (720) sont générés par une interpolation entre les points de repère (715) présents, où une courbe de décalage (725) est générée à partir de points acquis au moyen d'un balayage équidistant, laquelle est employée dans la période suivante.
